# EUROPÄISCHE PATENTSCHRIFT

(11) **EP 2 998 630 B1**
(45) Veröffentlichungstag und Bekanntmachung des Hinweises auf die Patenterteilung: **24.10.2018**
(21) Anmeldenummer: 15185407.2
(22) Anmeldetag: 16.09.2015
(51) Int. Cl.: F16K 39/04, F16K 11/065

(54) **VENTILANORDNUNG MIT KERAMISCHEN VENTILSCHEIBEN FÜR EINE SANITÄRARMATUR**
VALVE ASSEMBLY WITH CERAMIC VALVE DISCS FOR A SANITARY FITTING
SYSTÈME DE VANNES COMPRENANT DES RONDELLES DE VANNE EN CERAMIQUE POUR ROBINETTERIE

(30) Priorität: 17.09.2014 DE 102014113418
(43) Veröffentlichungstag der Anmeldung: 23.03.2016
(73) Patentinhaber: Franke Aquarotter GmbH, 14974 Ludwigsfelde (DE)
(72) Erfinder:
(74) Vertreter: Lemcke, Brommer & Partner Patentanwälte Partnerschaft mbB

(56) Entgegenhaltungen:
- DE-A1- 2 840 106
- DE-A1- 3 743 052
- DE-A1- 19 923 988

## Beschreibung

Die vorliegende Erfindung betrifft eine Sanitärarmatur mit keramischen Ventilscheiben sowie eine Ventilanordnung für eine solche Sanitärarmatur.

Bei Einhebelmischern kommen seit längerem keramische Ventilscheiben zum Einsatz, die aufgrund ihrer Härte und Passgenauigkeit hohe Standzeiten gewährleisten und zu einem wartungsfreien Betrieb führen.

Selbstschlussarmaturen werden dagegen bis heute nach wie vor als Armaturen mit Sitzventil gebaut, bei denen ein mit einer elastischen Dichtung versehenes Schließelement gegen einen Ventilsitz gehalten wird. Solche Selbstschlussarmaturen arbeiten mit einer Gegendruckkammer, welche zum Öffnen des Ventils entleert wird und sich dann langsam wieder mit Leitungswasser füllt, bis der Leitungsdruck in der Gegendruckkammer das Ventil wieder verschließt. Sitzventile sind einerseits wartungsanfällig und haben eine vergleichbar kurze Lebensdauer. Anderseits kann das in der Gegendruckkammer vorhandene Stagnationswasser bei längerer Nichtbenutzung zu Keimbildung neigen und zu hygienischen Problemen führen.

Der Grund für die Verwendung von Sitzventilen bei Selbstschlussarmaturen ist, dass die Betätigungskräfte bei keramischen Scheibenventilen recht hoch sind. Sanitärarmaturen müssen für einen Leitungsdruck bis 16 bar ausgelegt und dicht sein. Zwischen zwei Ventilscheiben wirken also in Schließstellung bei dem maximalen Druck von 16 bar, maximale entgegengesetzte Kräfte zwischen den Ventilscheiben. Damit das Ventil dicht bleibt, muss eine entsprechend hohe Andruckkraft aufgebracht werden, die ein Abheben der Ventilscheiben voneinander verhindert. Da in normalen Betriebssituationen jedoch nur 2-3 bar Leitungsdruck anliegen, wirkt in Schließstellung eine hohe resultierende Andruckkraft, die zu einer großen Reibungskraft zwischen den Ventilscheiben führt. Diese Reibungskräfte können aufgrund der großen Hebelwirkung bei Einhebelmischern leicht überwunden werden.

Da bei Selbstschlussarmaturen aber nur eine relative geringe Betätigungskraft von maximal 65 N zulässig ist, reichen die erreichbaren Rückstellkräfte nicht aus, um die Reibungskraft zu überwinden und die Ventilscheiben aus der Schließstellung heraus gegeneinander zu bewegen.

Die DE 37 43 052 A1 offenbart ein Wendeglied für Anschlüsse in Wasserarmaturen mit einem Drehschieber mit gegenüberliegenden stirnseitigen Ein- und Auslassöffnungen für Kalt- und Warmwasser, welcher Drehschieber eine drehbare Steuerscheibe aufweist.

Aus der DE 199 23 988 A1 ist ein Einhebelmischer mit keramischen Dichtscheiben bekannt, bei dem der Betätigungshebel als Hohlkörper ausgeführt ist, in dem eine Selbstschlusseinrichtung untergebracht ist. Diese besteht aus einem mit Hydrauliköl gefüllten Dämpfer und einer Rückstellfeder, durch welche der Mischerhebel selbsttätig von einer Öffnungsstellung zurück in eine Schließstellung bewegt wird und dabei die Armatur schließt. Allerdings erfordert die Rückstellung des Bedienhebels aus den erläuterten Gründen hohe Rückstellkräfte, so dass das selbsttätige Schließen der Armatur störanfällig ist und ein Benutzer eine entsprechend hohe Kraft zum Öffnen der Armatur aufwenden muss. Mit dem üblichen Funktionsprinzip von Selbstschlussarmaturen, bei denen der Benutzer zum Öffnen des Ventils ein Betätigungselement herunterdrücken muss, ist dieses Prinzip nicht vereinbar.

Eine Aufgabe der vorliegenden Erfindung besteht darin, eine Sanitärarmatur, bevorzugt ein Selbstschlussventil, mit keramischen Ventilscheiben anzugeben, bei der die zwischen den Ventilscheiben auftretenden Reibungskräfte vermindert sind.

Ein wichtiger Aspekt um eine Selbstschlussarmatur mit keramischen Ventilscheiben zu realisieren, besteht darin, die aufgrund der erforderlichen Andruckkraft erzeugten Reibungskräfte, zu vermindern.

Die Erfindung schlägt daher vor, das Hauptabsperrventil einer Sanitärarmatur, welches zum Freigeben und Absperren eines Wasserflusses über eine von einem Benutzer bedienbare Betätigungseinheit dient, mittels einer Ventilanordnung aus drei keramischen Ventilscheiben auszubilden, bei der eine bewegliche Ventilscheibe zwischen je einer zulaufseitigen und einer auslaufseitigen statischen Ventilscheibe angeordnet ist. Die beiden statischen Ventilscheiben weisen einen oder mehrere zueinander korrespondierende, insbesondere fluchtende Durchlassöffnungen auf. Zwischen den beiden statischen Ventilscheiben ist die bewegliche Ventilscheibe linear verschiebbar, und kann aus einer Schließstellung, in der sie einen Wasserfluss zwischen den jeweils korrespondierenden Durchlassöffnungen versperrt, in eine Öffnungsstellung, in der sie einen Wasserfluss freigibt, bewegt werden und umgekehrt.

Aufgrund der glatten Oberflächen keramischer Bauteile sind die zwischen diesen wirkenden Reibungskräfte gering. Außerdem können die zwischen den einzelnen Ventilscheiben wirkenden Druckkräfte vermindert und besser verteilt werden. Die um das Ventil dicht zu halten erforderliche Anpresskraft bzw. Vorspannung der Ventilscheiben kann somit vermindert werden, so dass im Ergebnis die zwischen den Ventilscheiben wirkenden Reibungskräfte verringert werden.

Damit vor allem die im geschlossenen Zustand auf die bewegliche Ventilscheibe wirkenden Kräfte zumindest teilweise kompensiert werden, ist erfindungsgemäß vorgesehen, dass die bewegliche Ventilscheibe auf ihrer zur auslaufseitigen statischen Ventilscheibe weisenden Seite mindestens eine Druckausgleichsfläche besitzt, zu der in einem geschlossenen Ventilzustand über einen Entlastungskanal eine fluidleitende Verbindung zu mindestens einer Durchlassöffnung in der zulaufseitigen Ventilscheibe besteht.

Durch geeignete Anordnung und Dimensionierung von einer oder mehrerer Druckausgleichsflächen, die über Entlastungskanäle im geschlossenen Zustand von Wasser hinterströmt werden können, werden zwischen den Ventilscheiben aufgrund des Wasserdrucks wirkende Kräfte reduziert. Die zwischen den Ventilscheiben wirkenden Andruckkräfte können dadurch verringert und unabhängig von der Stellung des Ventils und vom Leitungsdruck vergleichsweise konstant gehalten werden. Dies führt zu einer geringeren Reibungskraft zwischen den Ventilscheiben und zu reduziertem Verschleiß.

Vorzugsweise weist die bewegliche Ventilscheibe mindestens eine Ventilöffnung auf, die in der Öffnungsstellung mit den Durchlassöffnungen der zulaufseitigen und der auslaufseitigen Ventilscheibe korrespondiert und mit diesen zumindest teilweise in Deckung gebracht ist, um den Wasserfluss freizugeben. In diesem Fall kann die fluidleitende Verbindung im geschlossenen Ventilzustand durch die Ventilöffnung verlaufen, so dass in der Ventilöffnung der Wasserdruck am Zulauf anliegt.

Die Druckausgleichsfläche wird vorzugsweise durch eine Ausnehmung auf der einem Auslauf der Sanitärarmatur zugewandten Seite der beweglichen Ventilscheibe gebildet. Dies ist vorteilhaft, da die bewegliche Ventilscheibe in der Praxis ohnehin im Vergleich zu den statischen Ventilscheiben stärker ausgelegt werden sollte, als die statischen Ventilscheiben, um genügend Angriffsfläche für einen Betätigungsmechanismus zu bieten.

Alternativ kann aber auch die auslaufseitige Ventilscheibe eine entsprechende Ausnehmung aufweisen, wobei als flüssigkeitshinterströmte Druckausgleichsfläche die zu der Ausnehmung weisende Fläche der beweglichen Ventilscheibe wirkt.

Um einen einfachen und sicheren Zusammenbau der Sanitärarmatur zu ermöglichen, sind bei einer Weiterbildung der Erfindung die drei Ventilscheiben der Ventilanordnung in einem gemeinsamen Gehäuse angeordnet. Diese Anordnung aus Gehäuse und darin gekapselten Ventilscheiben wird hier auch als Ventilpatrone bezeichnet.

Hierbei ist es vorteilhaft, wenn das Gehäuse zwei Gehäuseteile umfasst, die mittels einer Feder zusammengehalten werden. Die Gehäuseteile können beispielsweise ein Gehäusegrundteil und ein zugehöriger Gehäusedeckel sein, oder auch zwei Gehäusehalbschalen. Die Federkraft, mit der die Gehäuseteile zusammengehalten werden kann dann gleichzeitig als Vorspannung des Ventils, also als Andruckkraft der Ventilscheiben gegeneinander genutzt werden.

Eine Sanitärarmatur, bei der die beschriebene Ventilanordnung vorteilhaft eingesetzt werden kann, kann mit einem Schließantrieb ausgerüstet werden, der einen Dämpfer, welcher ein verschiebbares Dämpferorgan aufweist, das mit der beweglichen Ventilscheibe über ein axial wirkendes Stellelement mechanisch gekoppelt ist, und ein Rückstellelement, welches eine Rückstellkraft auf das verschiebbare Dämpferorgan ausübt; aufweist. Das Dämpferorgan ist zum Öffnen der Sanitärarmatur von einer Ausgangslage in eine Endlage auslenkbar und bewegt dabei die Ventilscheibe über das Stellelement in die Öffnungsstellung, von der aus das Dämpferorgan durch die von dem Rückstellelement ausgeübte Rückstellkraft selbsttätig gegen den Widerstand des Dämpfers zurück in die Ausgangslage bewegt wird und dabei die bewegliche Ventilscheibe über das Stellelement in die Schließstellung zurückführt. Mit einem solchen Schließantrieb in Kombination mit der erfindungsgemäßen Ventilanordnung kann auf einfache Weise eine zuverlässige und robuste Selbstschlussarmatur mit keramischen Ventilscheiben realisiert werden. Die Ventilanordnung dient hierbei als Schließventil für Kaltwasser oder für vorgemischtes bzw. vortemperiertes Mischwasser.

Als vorteilhaft erweist sich weiterhin, wenn das Stellelement bei seiner Rückbewegung zunächst einen Leerhub ausführt, bevor ein am Stellelement vorgesehenes Mitnehmerorgan eine Schließbewegung des Ventils bewirkt. Durch den Leerhub wird die Öffnungszeit der Selbstschlussarmatur definiert, während der ein in der Wassermenge konstanter Wasserstrom fließen kann.

Alternativ zu dem genannten Stellantrieb kann die Sanitärarmatur auch eine Betätigungseinheit mit einen elektrisch betätigten Stellantrieb aufweisen, der mit der beweglichen Ventilscheibe über ein axial wirkendes Stellelement mechanisch gekoppelt ist. Ebenso ist es möglich, eine mechanische Betätigungseinheit wie etwa einen Bedienhebel vorzusehen, der mit der beweglichen Ventilscheibe über ein axial wirkendes Stellelement mechanisch gekoppelt ist.

Des Weiteren kann die Sanitärarmatur mit einer Mischerbaugruppe ausgestattet werden. Eine solche Mischerbaugruppe umfasst ein drehbares Mischerbauteil und kann mit der erfindungsgemäßen Ventilanordnung über das Stellelement koaxial gekoppelt werden, indem dieses beispielsweise Linearbewegungen auf die bewegliche Ventilscheibe und eine Rotationsbewegungen auf das drehbare Mischerbauteil überträgt.

Sanitärarmaturen umfassen ein metallisches Armaturengehäuse, in welches, beispielsweise in Form einer Ventilkartusche, die Ventilanordnung eingesetzt wird. Meist sind solche Armaturengehäuse insbesondere im Bereich eines Auslaufs wasserführend, kommen also mit dem Wasser in direkten Kontakt. Im Rahmen der vorliegenden Erfindung ist bei einer vorteilhaften Weiterbildung allerdings vorgesehen, dass der Wasserfluss von der Ventilanordnung bis zu dem Auslauf über nichtmetallische Leitungen innerhalb des Armaturengehäuses geführt wird. Hierdurch braucht das Armaturengehäuse was seine Metalllegierung betrifft nicht in Trinkwasserqualität ausgeführt zu werden und kann somit kostengünstiger hergestellt werden. Außerdem erweisen sich nichtmetallische Leitungen aus hygienischen Gesichtspunkten als vorteilhaft gegenüber einem metallischen wasserführenden Armaturengehäuse.

Weitere vorteilhafte Weiterbildungen und Vorteile der Erfindung werden anhand der Ausführungsbeispiele und der beigefügten Zeichnungen beschrieben. Hierbei zeigt:
- Figur 1: einen Längsschnitt entlang der Mittelachse einer Selbstschlussarmatur,
- Figur 2: eine isometrische Ansicht einer in der Selbstschlussarmatur aus Figur 1 eingebauten Ventilpatrone,
- Figur 3a: eine Frontalansicht der Ventilpatrone aus Figur 2,
- Figur 3b: eine Rückansicht der Ventilpatrone aus Figur 2,
- Figur 4: eine isometrische Ansicht einer beweglichen Ventilscheibe aus der Ventilpatrone von Figur 2,
- Figur 5: eine isometrische Ansicht aller drei Ventilscheiben aus der Ventilpatrone von Figur 2 mit der beweglichen Ventilscheibe aus einer rückwärtigen Perspektive,
- Figur 6a: einen vertikalen Schnitt durch die Ventilpatrone aus Figur 2 entlang der Schnittlinie V-V in Schließstellung der beweglichen Ventilscheibe,
- Figur 6b: den Schnitt aus Figur 6b in Öffnungsstellung der beweglichen Ventilscheibe,
- Figur 7: den Schnitt aus Figur 6a mit symbolisch eingezeichnetem Wasserdruck,
- Figur 8: die Ansicht der beweglichen Ventilscheibe aus Figur 4b mit eingezeichnetem Wasserverlauf und -druck,
- Figur 9: eine isometrische Ansicht des in Figur 1 verbauten Schließantriebs,
- Figur 10: einen Längsschnitt durch den Schließantrieb aus Figur 9,
- Figur 11: den Zusammenbau einer Mischerbaugruppe zur Verwendung in der Selbstschlusarmatur aus Figur 1 und
- Figuren 12a, 12b: eine isometrische Ansicht der Ventilscheiben einer Ventilpatrone in einem zweiten Ausführungsbeispiel.

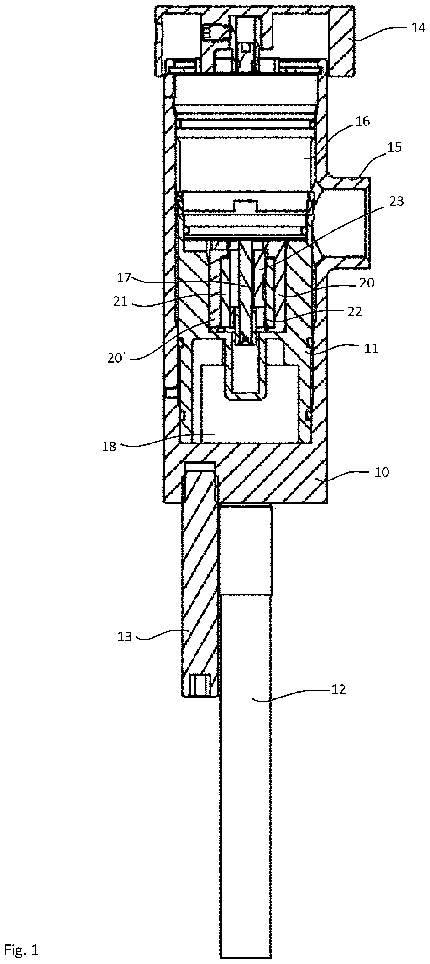

Figur 1 zeigt einen Längsschnitt durch eine Selbstschlussarmatur mit einem Armaturengehäuse 10 in welches eine Ventilkartusche 11 eingesetzt ist. Am unteren Ende des Ventilgehäuses 10 ist eine Wasserzuleitung 12 angeschlossen. Ein Montagebolzen 13 dient zur Befestigung der Selbstschlussarmatur an einem Waschtisch.

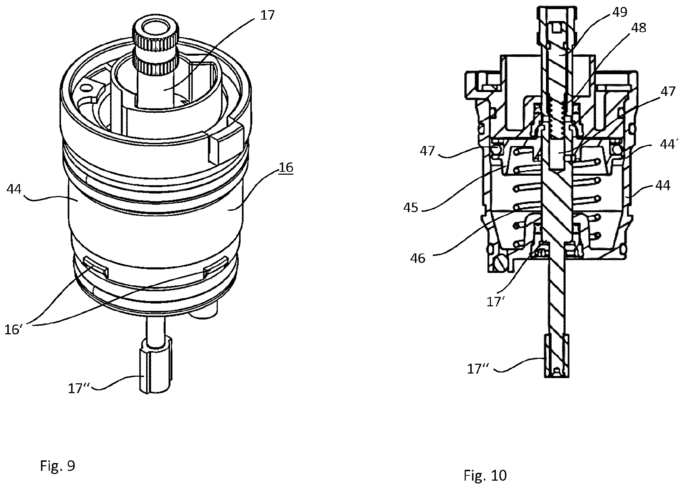

Am oberen Ende der Sanitärarmatur befindet sich ein als Druckknopf ausgebildetes Bedienelement 14. Durch Herunterdrücken des Bedienknopfs 14 wird ein Wasserfluss zu einem Auslauf 15 des Armaturengehäuses 10 freigegeben. Ein mit der Ventilkartusche 11 verbundener Schließantrieb 16 sorgt dafür, dass der Wasserfluss nach einer vorgegebenen Zeitspanne wieder abgestellt wird und die Selbstschlussarmatur schließt. Der Schließantrieb 16, auf dessen genaue Funktion es im Rahmen der vorliegenden Erfindung nicht ankommt, ist in Figur 1 ungeschnitten gezeigt. Eine Detailansicht des Schließantriebs 16 ist außerdem in den Figuren 10a und 10b gezeigt.

Ein Herzstück der Sanitärarmatur ist eine Ventilanordnung mit keramischen Ventilscheiben. Diese Ventilanordnung umfasst zwei statische Ventilscheiben 21, 22, nämlich eine zulaufseitige Scheibe 21 und eine auslaufseitige Ventilscheibe 22, sowie eine zwischen den beiden statischen Ventilscheiben 21, 22 angeordnete bewegliche Ventilscheiben 23. Die drei keramischen Ventilscheiben 21 bis 23 sind in einem Ventilpatronengehäuse 20 angeordnet, welches mit einem Gehäusedeckel 20' verschlossen ist.

Die Betätigung der Ventilanordnung erfolgt durch eine Kolbenstange 17, die sich von dem Bedienknopf 14 durch den Schließantrieb 16 hindurch erstreckt und an der beweglichen Ventilscheibe 23 angreift. Durch Drücken des Bedienknopfes 14 wird die bewegliche Ventilscheibe 23 über die Kolbenstange 17 nach unten in eine Öffnungsstellung bewegt und gibt so einen Wasserfluss frei. Der Schließantrieb 16 sorgt dafür, dass die Kolbenstange 17 und mit ihr die bewegliche Ventilscheibe 23 nach Ablauf der vorgegebenen Öffnungszeit wieder nach oben in eine Schließstellung bewegt wird.

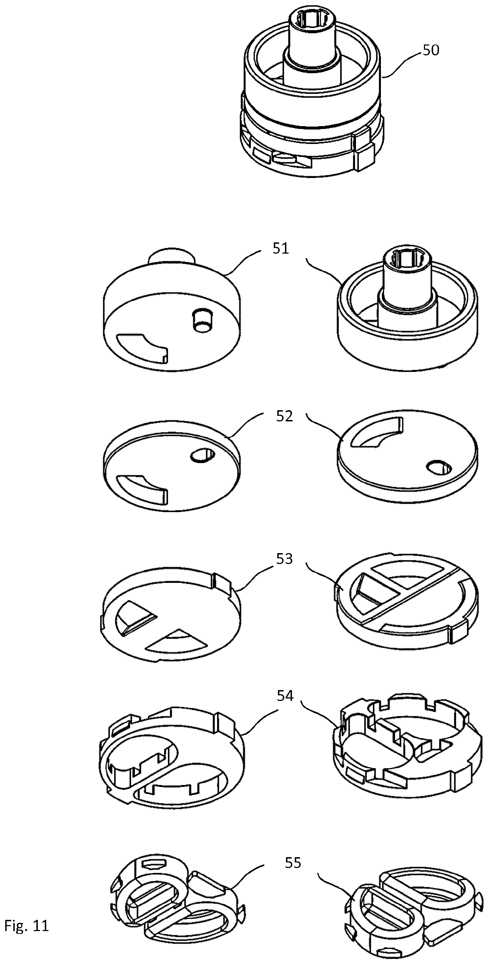

Unterhalb der Ventilanordnung befindet sich ein freier Bauraum 18, in den je nach Modell der Selbstschlussarmatur ein separater Mischer eingesetzt werden kann, mit dem über entsprechende Zuleitungen 12 separat zugeführtes Kalt- und Warmwasser in einem einstellbaren Mischungsverhältnis verschnitten werden kann und dann als Mischwasser über die beschriebene Ventilanordnung zum Auslauf 15 gelangt. In der in Figur 1 gezeigten Bauform ist ein solcher Mischer nicht eingebaut und stattdessen durch ein Leerelement ersetzt, so dass der Bauraum 18 im Wesentlichen frei bleibt. Eine Mischerbaugruppe, welche in den Bauraum 18 eingesetzt werden kann, ist in Figur 11 gezeigt.

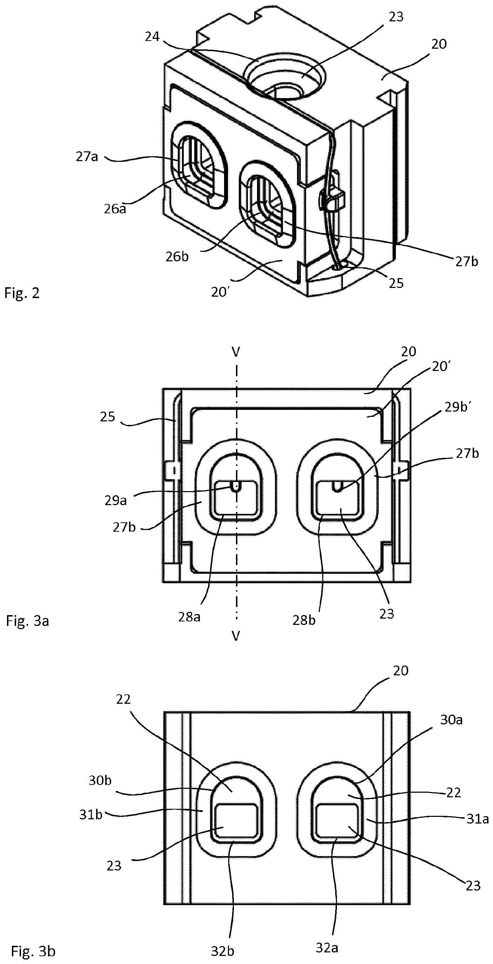

Die Ventilanordnung ist im Ausführungsbeispiel wie beschrieben in einem Gehäuse 20 untergebracht und wird im Folgenden als Ventilpatrone bezeichnet. In Figur 2 ist diese separat gezeigt. Das Gehäuse 20 der Ventilpatrone weist eine obere Öffnung 24 auf, durch welche die Kolbenstange 17 hindurchgeführt ist. Durch die Öffnung 24 ist der obere Rand der beweglichen Ventilscheibe 23 zu erkennen, die sich in Figur 2 in ihrer oberen Stellung, der Schließstellung, befindet.

Die vordere, zulaufseitige Seite des Gehäuses 20 ist mit einem Gehäusedeckel 20' verschlossen. Der Gehäusedeckel 20' ist mit einer U-förmigen Biegefeder 25 gegen das Gehäuse 20 gehalten und überträgt so eine Andruckkraft auf die in dem Gehäuse befindlichen Ventilscheiben 21 bis 23. Die vertikale Mittenachse der Ventilpatrone entspricht dem Verlauf der durch die Ventilpatrone geführten Kolbenstange 17. Seitlich versetzt von der vertikalen Mittenachse sind in dem Gehäusedeckel 20' zwei Durchlassöffnungen 26a, 26b angeordnet, die mit zugehörigen Dichtungen 27a, 27b versehen sind. An der Rückseite der Ventilpatrone befinden sich entsprechende Durchlassöffnungen, die jedoch in der in Figur 2 gezeigten Ansicht verdeckt sind.

In den Figuren 3a und 3b sind zwei Seitenansichten der Ventilpatrone gezeigt. Die bewegliche Ventilscheibe 23 befindet sich dabei jeweils in der Schließstellung. Figur 3a zeigt eine Draufsicht auf die Vorderseite der Ventilpatrone. Durch die Durchlassöffnungen 26a, 26b im Gehäusedeckel 20' blickt man zunächst auf die zulaufseitige statische Ventilscheibe 21, welche zwei mit den Durchlassöffnungen 26a, 26b im Gehäusedeckel 20' korrespondierende Durchlassöffnungen 28a, 28b aufweist, die gegenüber den Durchlassöffnungen 26a, 26b aber etwas kleiner ausfallen.

Durch die Durchlassöffnungen 28a, 28b blickt man auf die dahinter befindliche bewegliche Ventilscheibe 23. Die bewegliche Ventilscheibe 23 weist zwei Entlastungskanäle 29 auf, die in der Schließstellung jeweils in einer der Durchlassöffnungen 28a, 28b der zulaufseitigen statischen Ventilscheibe 21 münden.

Eine Draufsicht auf die Rückseite der Ventilpatrone ist in Figur 3b gezeigt. Das Gehäuse 20 weist hier zwei Durchlässe 30a, 30b auf, die mit zugehörigen Dichtungen 31a, 31b versehen sind. Durch die beiden Durchlässe 30a, 30b erkennt man die auslaufseitige statische Ventilscheibe 22. Diese weist wie die zulaufseitige Ventilscheibe 21 ebenfalls zwei Durchlassöffnungen 32a, 32b auf, die als Auslauföffnungen der Ventilanordnung dienen. Durch die Durchlassöffnungen 32a, 32b in der Ventilscheibe 22 blickt man auf die bewegliche Ventilscheibe 23, welche den Wasserfluss durch die Ventilpatrone versperrt.

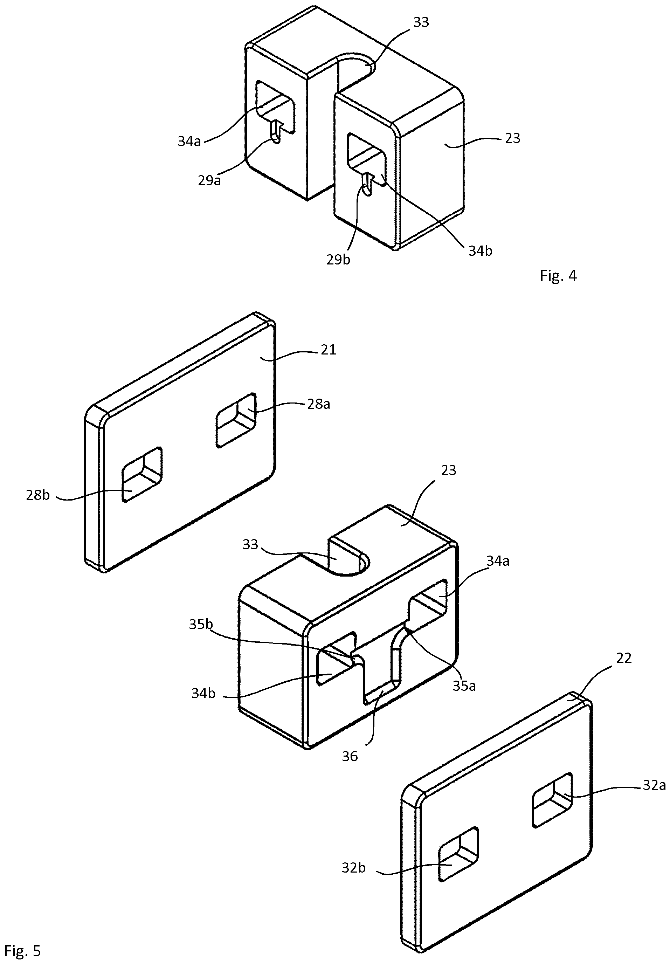

In den Figur 4 und 5 ist die bewegliche Ventilscheibe 23 jeweils von vorne und hinten gezeigt. In ihrer vertikalen Längsachse weist die bewegliche Ventilscheibe 23 eine nach vorne offene U-förmige Ausnehmung 33 auf, in welche die Kolbenstange 17 eingreift. Jeweils links und rechts von der U-förmigen Ausnehmung 33 weist die Ventilscheibe 23 Ventilöffnungen 34a, 34b auf, in welche die Entlastungskanäle 29a, 29b münden. Auf ihrer rückwärtigen, in Figur 5 dargestellten Seite weist die Ventilscheibe 23 zwei weitere von den beiden Ventilöffnungen 34a, 34b seitlich abzweigende Entlastungskanäle 35a, 35b auf, welche in einer in etwa mittig angeordneten Ausnehmung 36 münden, die als Druckausgleichsfläche dient.

Figur 5 zeigt außerdem die beiden der statischen Ventilscheiben, und zwar die zulaufseitige Ventilscheibe 21 mit den beiden Öffnungen 28a, 28b und die auslaufseitige Ventilscheibe 22 mit den beiden Öffnungen 32a, 32b, die an sich identisch gebaut sind.

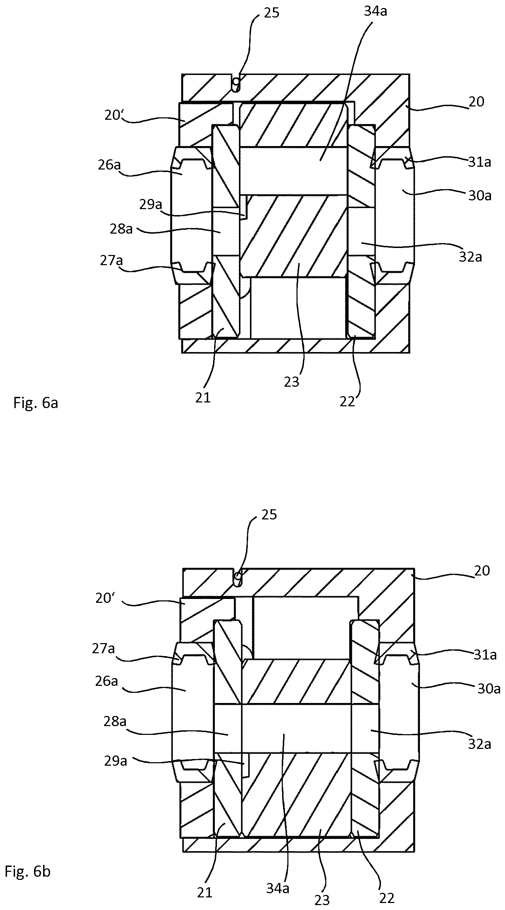

In den Figuren 6a und 6b ist jeweils ein vertikal verlaufender Schnitt durch die Ventilpatrone entlang der Linie V-V der Figur 3a gezeigt. In Figur 6a befindet sich die Ventilanordnung dabei in der geschlossenen Stellung, in Figur 6b in der geöffneten. In der in Figur 6a gezeigten geschlossenen Stellung versperrt die bewegliche Ventilscheibe 23 die Durchlassöffnung 32a in der auslaufseitigen Ventilscheibe 22. Zulaufseitig besteht jedoch eine Verbindung von der Durchlassöffnung 28a in der zulaufseitigen Ventilscheibe 21 über den Entlastungskanal 29a zu der Ventilöffnung 34a in der beweglichen Ventilscheibe 23 und von dort weiter über den Entlastungskanal 35a zu der als Druckausgleichsfläche dienenden Ausnehmung 36 auf der dem Auslauf zugewandten Seite der beweglichen Ventilscheibe 23. In Figur 6b ist die bewegliche Ventilscheibe 23 in ihrer unteren Stellung, der Öffnungsstellung gezeigt. Die Ventilöffnung 34a in der beweglichen Ventilscheibe 23 gibt nun den Wasserfluss von der Durchlassöffnung 28a der Ventilscheibe 21 zur Durchlassöffnung 32a der Ventilscheibe 22 frei.

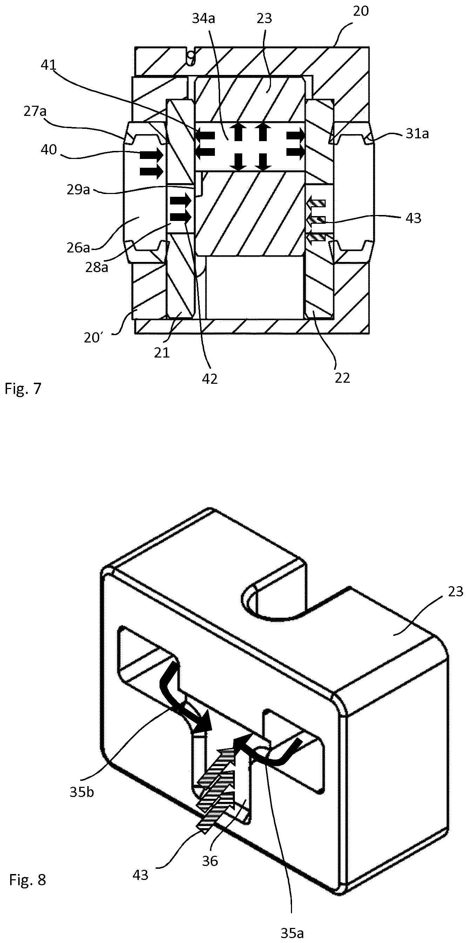

In Figur 7 ist schematisch der auf die einzelnen Ventilscheiben 21, 22, 23 in der Schließstellung wirkende Wasserdruck eingezeichnet. Auf die zulaufseitige Ventilscheibe 21 wirkt der Wasserdruck 40 auf die durch die Öffnung 27 des Gehäusedeckels 20' freiliegende Fläche. Durch den Entlastungskanal 29a gelangt der Wasserdruck jedoch auch in die Ventilöffnung 34 in der beweglichen Ventilscheibe 23 und erzeugt so auf der entgegengesetzten Seite der Ventilscheibe einen Gegendruck 41. Durch die Durchlassöffnung 28a liegt ein Druck 42 an der beweglichen Ventilscheibe 23. Dieser summiert sich mit dem Druck 40 zu einem Anpressdruck, mit dem die Ventilscheine 23 gegen die Ventilscheibe 22 angepresst wird.

Figur 8 zeigt, wie der Wasserdruck durch die Entlastungskanäle 35a, 35b zu der Ausnehmung 36 auf der Rückseite der beweglichen Ventilscheibe 23 gelangt und dort einen Gegendruck 43 auf die als Druckausgleichsfläche wirkende Ausnehmung 36 erzeugt. Dieser ist in Figur 7 durch schraffierte Blockpfeile angedeutet, da diese nicht in der Schnittebene liegen. Durch geeignete Dimensionierung der Druckausgleichsfläche 36 einerseits, der Durchlassöffnungen 28a und 34a anderseits sowie der innerhalb der Öffnung 27 im Gehäusedeckel 20' freiliegende Fläche der zulaufseitigen Ventilscheibe 21 kann so erreicht werden, dass sich die Druckkräfte, welche auf die einzelnen Ventilscheiben 21, 22, 23 durch das anstehende Wasser wirken, zumindest teilweise kompensiert werden. Somit werden die Reibungskräfte zwischen den Ventilscheiben 21, 22, 23 deutlich reduziert.

In Figur 7 ist außerdem gezeigt, dass die Dichtungen 27a, 31a an der zulaufseitigen bzw. auslaufseitigen Öffnung im Gehäuse 20 bzw. Gehäusedeckel 20' als Lippen- oder Lamellendichtung ausgelegt sind. Durch Druckbeaufschlagung werden die seitlichen Flanken der Lippen- oder Lamellendichtungen 27a, 31a, gegen die Ventilscheiben 21, 22 bzw. die zulaufseitigen und auslaufseitigen Gehäuseteile gepresst, so dass die Dichtwirkung verstärkt wird. Wenn hingegen kein Wasserdruck anliegt, ist die Andruckkraft der Lippen- oder Lamellendichtung reduziert. Auch dies trägt dazu bei, die erforderlichen Betätigungskräfte zum Öffnen bzw. Schließen des Ventils gering zu halten.

Der Betätigungshub bei dem erfindunggemäßen Schließantrieb setzt sich aus einen Leerhub und einem Betätigungshub zusammen. Bei dem Leerhub wird die Kolbenstange 17 gegen den federbelasteten Widerstand des Schließantriebs 16 heruntergedrückt. Die Ventilscheibe 23 wird hierbei noch nicht bewegt. Der Kräfteverlauf entspricht dem Spannen einer im Schließantrieb 16 befindlichen Rückstellfeder nach dem Hookeschen Gesetz.

Bei einem bestimmten Betätigungsweg endet der Leerhub und die Kolbenstange 17 greift mit einer Schulter 17' an die bewegliche Ventilscheibe 23. Die Betätigungskraft steigt dann Betragsmäßig um die Kraftkomponente, die erforderlich ist, um die bewegliche Ventilscheibe in ihrer Schließstellung zu bewegen. Sobald sich sich die Durchlasssöffnungen der Ventilscheiben 21, 22, 23 übereinander schieben und ein Wasserfluss einsetzt, entfallen die aufgrund anstehenden Wasserdrucks resultierenden Druckkräfte und die Betätigungskraft für den weiteren Betätigungshub sinkt wieder. Eine zusätzliche als Betätigungskraft aufzubringende Kraftkomponente resultiert aus der Vorspannkraft der Dichtungen 27a, 31a und der Biegefeder 25, welche eine Anpresskraft auf das Ventilscheibenpaket ausüben, sowie aus weiteren Reibungskräften, welche von den Dichtungen der Kolbenstange 17 herrühren.

In Figur 9 ist ein hydraulisch gedämpfter Schließantrieb 16 separat gezeigt. Er besitzt ein Dämpfergehäuse 44 in welches mittig das stabförmige Stellelement 17 eingesetzt ist. Rastnasen 16' im unteren Bereich des Schließantriebs 16 verrasten beim Zusammenbau des Schließantriebs 16 mit der Ventilkartusche 11 in den Ausnehmungen an einem Montagekranz des Kartuschengehäuses.

In Figur 10 ist der Schließantrieb 16 mit eingesetztem Stellelement 17 in einem Axialschnitt gezeigt. Das Dämpfergehäuse 44 des Schließantriebs 16 dient hierbei als Hydraulikzylinder für einen darin in axialer Richtung beweglichen Hydraulikkolben 45, der mit dem stabförmigen Stellelement 17 beispielsweise mittels eines Sicherungsrings verbunden und gegenüber diesem drehbar gelagert ist. Das Stellelement 17 stellt damit eine Kolbenstange eines hydraulischen Dämpfers 16 dar.

Im unteren Teil des Dämpfergehäuses 44 ist unterhalb des Kolbens 45 eine Schraubendruckfeder 46 angeordnet, die auf den Kolben 45 eine nach oben gerichtete Rückstellkraft ausübt. Anstelle einer Schraubendruckfeder 46 können natürlich auch andere Arten von Kraftspeichern als Rückstellelement eingesetzt werden, wie beispielsweise Gasdruckfedern, Tellerfedern, Ringfedern, Elastomerfedern o.ä..

Wird die Kolbenstange 17 und damit der Kolben 45 nach unten gedrückt, so verdrängt der Kolben 45 im Dämpfergehäuse 44 befindliche Hydraulikflüssigkeit, die an dem schwimmend gelagerten Kolbenring 47 vorbei in den Bereich oberhalb des Kolbens 45 fließen kann. Über die Schulter 17' bewegt das Stellelement 17 beim Herunterdrücken die bewegliche Ventilscheibe 23 der Ventileinheit 20 in die Öffnungsstellung und gibt so einen Wasserfluss frei. Die Rückstellfeder 46 sorgt anschließend dafür, dass der Kolben 45 zurück in seine obere Endlage innerhalb des Dämpfergehäuses 44 bewegt wird. Hierbei muss die oberhalb des Kolbens 45 stehende Hydraulikflüssigkeit verdrängt werden und durch eine Engstelle zurück in den unteren Bereich des Dämpfergehäuses 44 fließen. Die Engstelle wird im Ausführungsbeispiel durch die axiale Bohrung 47 im Inneren des Stellelements 17 gebildet. Die axiale Bohrung 47 ist mit einem Gewinde 48 versehen, in welches die Stellschraube 49 eingesetzt ist, mittels der der Querschnitt der Engstelle und damit die Öffnungszeit des Ventils variiert werden kann. Im oberen Bereich 44' des Dämpfergehäuses 44 ist der Durchmesser des Dämpfers geringfügig erweitert, so dass in diesen Bereich der Kolben 45 mit wesentlich niedrigerem Widerstand nach oben bewegt werden kann, da die Hydraulikflüssigkeit um die Kolbendichtung 47 herumfließen kann.

Eine Mischerbaugruppe 50, die in den Bauraum 18 der Sanitärarmatur eingesetzt werden kann, ist in Figur 11 in einer Explosionszeichnung gezeigt. Sie umfasst ein Mischeroberteil 51, welches drehfest aber axial verschieblich mit dem Stellelement 17 verbunden wird, ein Mischerunterteil 54, welches statisch mit dem Gehäuse der Ventilkartusche 11 verbunden wird, sowie zugehörige Dichtungen 55. Zwischen Mischeroberteil 51 und dem als dichtender Gehäuseabschluß dienenden Mischerunterteil 54 sind zwei keramische Mischerscheiben 52, 53 eingesetzt.

Das Mischeroberteil 51 dient hierbei als Mitnehmer für die drehbare Mischerscheibe 52 und wird drehfest aber axial verschieblich mit dem Zapfen 17" des Stellelements 17 zusammengesteckt. Die statische Mischerscheibe 53 wird zusammen mit dem Mischerunterteil 54 starr in das Gehäuse der Ventilkartusche 11 eingesetzt. Die keramischen Mischerscheiben 52, 53 dienen in an sich bekannter Weise dazu, über separate Zuleitungen 12 zugeführtes Warm- und Kaltwasser in einstellbarem Mischungsverhältnis miteinander zu Mischwasser zu verschneiden. Das so gemischte Mischwasser gelangt dann bei geöffneter Ventileinheit 20 zum Auslauf 15 der Sanitärarmatur.

Während im vorstehend beschriebenen Ausführungsbeispiel die Erfindung anhand einer Selbstschlussarmatur für einen Waschtisch beschrieben wurde, ist die Erfindung jedoch auf diese Anwendung nicht beschränkt. Vielmehr kann die beschriebene Ventilanordnung mit ihren drei Ventilscheiben als Schließventil für Kaltwasser oder für vorgemischtes bzw. vortemperiertes Mischwasser in einer Vielzahl anderer Armaturen zum Einsatz kommen, wie etwa einer elektrisch angetriebenen, berührungslosen Sanitärarmatur, einer Selbstschlussarmatur für Duschen, einem automatischen Schließventil für Urinale oder WC-Spüler, aber auch zusammen mit einem entsprechenden mechanischen oder thermostatischen Mischer als handbetätigte Sanitärarmatur für Waschtische oder Duschen z.B. in Form einer Einhebelarmatur.

Zu diesem Zweck kann der in den Ausführungsbeispielen beschriebene Stellantrieb durch eine Betätigungseinheit mit einen elektrisch betätigten Stellantrieb oder durch eine mechanische Betätigungseinheit wie etwa einen Bedienhebel ersetzt sein, die jeweils mit der beweglichen Ventilscheibe über ein axial wirkendes Stellelement mechanisch gekoppelt werden.

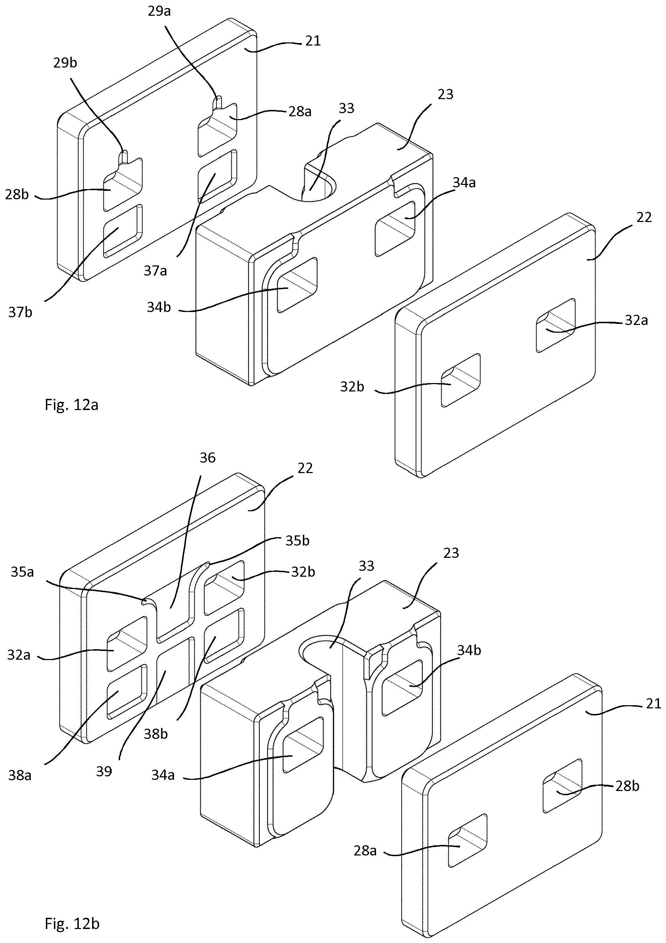

Schließlich ist in den Figuren 12a und 12b ein weiteres Ausführungsbeispiel für die Anordnung und Ausgestaltung der Ventilscheiben einer erfindungsgemäßen Ventilpatrone gezeigt. Im Vergleich mit dem Ausführungsbeispiel in den Figuren 3 bis 8 sind gleiche und gleichwirkende Elemente mit gleichen Bezugszeichen versehen. Im Unterschied zum ersten Ausführungsbeispiel ist einerseits die Ausnehmung bzw. Freimachung 36, die als Strömungsweg zum Hinterströmen der zugehörigen Druckausgleichsfläche auf der beweglichen Ventilscheibe 23 dient, nicht in der beweglichen Ventilscheibe 23 sondern auf der der beweglichen Ventilscheibe 23 zugewandten Seite der auslaufseitigen statischen Ventilscheibe 22 angeordnet. An der Ausnehmung 36 sind zwei seitlich abzweigende Entlastungskanäle 35a, 35b in der Ventilscheibe 22 ausgeformt.

In entsprechender Weise befinden sich die beiden Entlastungskanäle 29a, 29b, über die im geschlossenen Ventilzustand ein Strömungsweg zwischen der zulaufseitigen Durchlassöffnung 28a, 28b und der Ausnehmung 36 gegeben ist, auf der Innenseite der zulaufseitigen statischen Ventilscheibe 21.

Die Funktion der Ventilpatrone im zweiten Ausführungsbeispiel entspricht dem ersten Ausführungsbeispiel. Über die Entlastungskanäle 29a, 29b kann im geschlossenen Ventilzustand Wasser von der Zulaufseite über die Durchgangsöffnungen 34a, 34b in der beweglichen Ventilscheibe 23 und die seitlichen Entlastungskanäle 35a, 35b in der auslaufseitigen statischen Ventilscheibe zu der Ausnehmung 36 fließen und dort einen statischen Gegendruck aufbauen, der dem auf dem geschlossenen Ventil lastenden Wasserdruck entgegen wirkt bzw. diesen zumindest teilweise aufhebt.

Zusätzlich sind unterhalb der Durchlässe 28a, 28b bzw. 32a, 32b in der zulaufseitigen bzw. der auslaufseitigen statischen Ventilscheibe 21, 22 innenseitig weitere Ausnehmungen bzw. Freimachungen 37a, 37b, 38a, 38b, 39 angeordnet. Diese kommen nicht mit Wasser in Kontakt sondern dienen rein dazu, die Kontaktfläche und damit die Reibung zwischen den Ventilscheiben 21, 22, 23 zu verringern. Die seitlichen Ränder der beweglichen Ventilscheibe 23 sind aus herstellungstechnischen Gründen ein Stück weit freigestellt.

## Patentansprüche

1. Sanitärarmatur mit einer von einem Benutzer bedienbaren Betätigungseinheit und einem Hauptabsperrventil zum Freigeben oder Absperren eines Wasserflusses über die Betätigungseinheit, wobei das Hauptabsperrventil durch eine Ventilanordnung (20, 21, 22, 23) aus keramischen Ventilscheiben (21, 22, 23) gebildet wird, bei der eine bewegliche Ventilscheibe (23) zwischen je einer zulaufseitigen und einer auslaufseitigen statischen Ventilscheibe (21, 22) angeordnet ist, wobei die beiden statischen Ventilscheiben (21, 22) eine oder mehrere zueinander korrespondierende Durchlassöffnungen (28a, 28b, 33a, 32b) aufweisen und die bewegliche Ventilscheibe (23) zwischen einer Schließstellung, in der sie einen Wasserfluss zwischen den jeweils korrespondierenden Durchlassöffnungen (28a, 28b, 33a, 32b) versperrt, und einer Öffnungsstellung, in der sie einen Wasserfluss freigibt, bewegbar ist, und wobei die bewegliche Ventilscheibe (23) auf ihrer zur auslaufseitigen statischen Ventilscheibe (22) weisenden Seite mindestens eine Druckausgleichsfläche aufweist, zu der in einem geschlossenen Ventilzustand über mindestens einen Entlastungskanal (29a, 29b, 35a, 35b) eine fluidleitende Verbindung zu mindestens einer der Durchlassöffnungen (28a, 28b) in der zulaufseitigen Ventilscheibe (21) besteht,
**dadurch gekennzeichnet, dass**
die bewegliche Ventilscheibe (23) linear verschiebbar ist.

2. Sanitärarmatur nach Anspruch 2, bei der die bewegliche Ventilscheibe (23) mindestens eine Ventilöffnung (34a, 34b) aufweist, die in der Öffnungsstellung mit den Durchlassöffnungen (28a, 28b, 31a, 32b) der zulaufseitigen und der auslaufseitigen Ventilscheibe (21, 22) korrespondiert, und bei der die fluidleitende Verbindung im geschlossenen Ventilzustand durch die Ventilöffnung (34a, 34b) verläuft.

3. Sanitärarmatur nach Anspruch 1 oder 2, bei der die auslaufseitige Ventilscheibe (21, 22) auf ihrer zur beweglichen Ventilscheibe (23) weisenden Seite oder die bewegliche Ventilscheibe (23) auf ihrer einem Auslauf (15) der Sanitärarmatur (10) zugewandten Seite eine Ausnehmung (36) aufweisen, über die die Druckausgleichsfläche flüssigkeitshinterströmbar ist.

4. Sanitärarmatur nach einem der vorangehenden Ansprüche, bei der die drei Ventilscheiben (21, 22, 23) der Ventilanordnung (20, 21, 22, 23) innerhalb der Sanitärarmatur in einem gemeinsamen Gehäuse (20, 20') angeordnet sind.

5. Sanitärarmatur nach Anspruch 4, bei der das Gehäuse (20, 20') der Ventilanordnung zwei Gehäuseteile (20, 20') umfasst, die mittels einer Feder (25) zusammengehalten werden, wobei die Feder (25) eine Andruckkraft auf die Ventilscheiben (21, 22, 23) ausübt.

6. Sanitärarmatur nach einem der vorangehenden Ansprüche, umfassend einen Schließantrieb (16) mit
- einem Dämpfer (44, 45), welcher ein verschiebbares Dämpferorgan (45) aufweist, das mit der beweglichen Ventilscheibe (23) über ein axial wirkendes Stellelement (17) mechanisch gekoppelt ist, und
- einem Rückstellelement (46), welches eine Rückstellkraft auf das verschiebbare Dämpferorgan (45) ausübt;
wobei das Dämpferorgan (46) zum Öffnen der Sanitärarmatur von einer Ausgangslage in eine Endlage auslenkbar ist und dabei die bewegliche Ventilscheibe (23) über das Stellelement (17) in die Öffnungsstellung bewegt, von der aus das Dämpferorgan (45) durch die von dem Rückstellelement (46) ausgeübte Rückstellkraft selbsttätig gegen den Widerstand des Dämpfers (44, 45) zurück in die Ausgangslage bewegt wird und dabei die bewegliche Ventilscheibe (23) über das Stellelement (17) in die Schließstellung zurückführt.

7. Sanitärarmatur nach Anspruch 6, bei dem das Stellelement (17) bei seiner Rückbewegung zunächst einen Leerhub ausführt, bevor ein am Stellelement (17) vorgesehenes Mitnehmerorgan (17") eine Schließbewegung der beweglichen Ventilscheibe (23) bewirkt.

8. Sanitärarmatur nach einem der Ansprüche 1 bis 7, wobei die Betätigungseinheit einen elektrisch betätigten Stellantrieb aufweist, der mit der beweglichen Ventilscheibe (23) über ein axial wirkendes Stellelement (17) mechanisch gekoppelt ist.

9. Sanitärarmatur nach einem der Ansprüche 1 bis 7, wobei die Betätigungseinheit als mechanische Betätigungseinheit ausgebildet ist, die mit der beweglichen Ventilscheibe (23) über ein axial wirkendes Stellelement (17) mechanisch gekoppelt ist.

10. Sanitärarmatur nach einem der Ansprüche 6 bis 9, umfassend eine Mischerbaugruppe (50) mit einem drehbaren Mischerbauteil (52), wobei die bewegliche Ventilscheibe (23) der Ventilanordnung (20, 21, 22, 23) und das drehbare Mischerbauteil (52) über das Stellelement (17) verstellbar sind, indem dieses Linearbewegungen auf die bewegliche Ventilscheibe (23) und eine Rotationsbewegung auf das drehbare Mischerbauteil (52) überträgt.

11. Sanitärarmatur nach einem der vorangehenden Ansprüche, welche ein metallisches Armaturengehäuse (10) mit einem Wasserauslauf (15) aufweist, wobei ein Wasserfluss von der Ventilanordnung (20, 21, 22, 23) bis zu dem Auslauf (15) über nichtmetallische Leitungen innerhalb des Armaturengehäuses (10) geführt wird.

12. Ventilanordnung (20, 21, 22, 23) für eine Sanitärarmatur nach einem der vorangehenden Ansprüche.

## Claims

1. Sanitary fitting having an operating unit operable by a user and a main shut-off valve for allowing or blocking a flow of water by means of the operating unit, wherein the main shut-off valve is formed by a valve arrangement (20, 21, 22, 23) composed of ceramic valve discs (21, 22, 23), wherein a movable valve disc (23) is arranged between an inlet-side and an outlet-side static valve disc (21, 22), the two static valve discs (21, 22) having one or more mutually corresponding through-openings (28a, 28b, 33a, 32b) and the movable valve disc (23) being movable between a closed position, in which it blocks a flow of water between the respectively corresponding through-openings (28a, 28b, 33a, 32b), and an open position, in which it allows a flow of water, and wherein the movable valve disc (23) has on its side facing towards the outlet-side static valve disc (22) at least one pressure-equalisation surface, to which, in a closed state of the valve, a fluid-conducting connection to at least one of the through-openings (28a, 28b) in the inlet-side valve disc (21) is made via at least one relief channel (29a, 29b, 35a, 35b),
**characterised in that**
the movable valve disc (23) is linearly displaceable.

2. Sanitary fitting according to claim 2, wherein the movable valve disc (23) has at least one valve opening (34a, 34b) which, in the open position, corresponds to the through-openings (28a, 28b, 31a, 32b) of the inlet-side and the outlet-side valve discs (21, 22), and wherein the fluid-conducting connection runs through the valve opening (34a, 34b) in the closed state of the valve.

3. Sanitary fitting according to claim 1 or 2, wherein the outlet-side valve disc (21, 22) has on its side facing towards the movable valve disc (23) or the movable valve disc (23) has on its side facing towards an outlet (15) of the sanitary fitting (10) a recess (36) via which fluid is able to flow behind the pressure-equalisation surface.

4. Sanitary fitting according to any one of the preceding claims, wherein the three valve discs (21, 22, 23) of the valve arrangement (20, 21, 22, 23) are arranged inside the sanitary fitting in a common housing (20, 20').

5. Sanitary fitting according to claim 4, wherein the housing (20, 20') of the valve arrangement comprises two housing parts (20, 20') which are held together by means of a spring (25), the spring (25) exerting a pressing force on the valve discs (21, 22, 23).

6. Sanitary fitting according to any one of the preceding claims, comprising a closing drive (16) having
- a damper (44, 45) which has a displaceable damper member (45) mechanically coupled to the movable valve disc (23) via an axially acting actuator (17), and
- a restoring element (46) which exerts a restoring force on the displaceable damper member (45);
wherein, to open the sanitary fitting, the damper member (46) is movable from a starting position to an end position and on so moving moves the movable valve disc (23), via the actuator (17), into the open position, from which the damper member (45) is moved automatically by the restoring force exerted by the restoring element (46), against the resistance of the damper (44, 45), back into the starting position and on so moving returns the movable valve disc (23), via the actuator (17), to the closed position.

7. Sanitary fitting according to claim 6, wherein the actuator (17), during its return movement, first performs an idle stroke before a driver member (17") provided on the actuator (17) effects a closing movement of the movable valve disc (23).

8. Sanitary fitting according to any one of claims 1 to 7, wherein the operating unit has an electrically operated actuating drive which is mechanically coupled to the movable valve disc (23) via an axially acting actuator (17).

9. Sanitary fitting according to any one of claims 1 to 7, wherein the operating unit is in the form of a mechanical operating unit which is mechanically coupled to the movable valve disc (23) via an axially acting actuator (17).

10. Sanitary fitting according to any one of claims 6 to 9, comprising a mixer assembly (50) having a rotatable mixer component (52), wherein the movable valve disc (23) of the valve arrangement (20, 21, 22, 23) and the rotatable mixer component (52) are adjustable via the actuator (17) in that the latter transmits linear movements to the movable valve disc (23) and a rotational movement to the rotatable mixer component (52).

11. Sanitary fitting according to any one of the preceding claims, which has a metallic housing (10) having a water outlet (15), a flow of water being conducted from the valve arrangement (20, 21, 22, 23) to the outlet (15) via non-metallic lines inside the housing (10).

12. Valve arrangement (20, 21, 22, 23) for a sanitary fitting according to any one of the preceding claims.

## Revendications

1. Robinetterie sanitaire équipée d'une unité d'actionnement pouvant être manoeuvrée par un utilisateur, et d'une vanne principale d'isolement réalisée pour autoriser ou pour bloquer un écoulement d'eau par l'intermédiaire de ladite unité d'actionnement, ladite vanne principale d'isolement étant constituée d'un ensemble de distribution (20, 21, 22, 23) composé de platines obturatrices (21, 22, 23) en céramique, et dans lequel une platine obturatrice mobile (23) est interposée entre des platines obturatrices fixes (21, 22), respectivement situées côté afflux et côté sortie, les deux platines obturatrices fixes (21, 22) comportant un ou plusieurs orifice(s) de passage (28a, 28b, 32a, 32b) coïncidant mutuellement, et la platine obturatrice mobile (23) pouvant être mue entre une position de fermeture, dans laquelle elle bloque un écoulement d'eau entre les orifices de passage (28a, 28b, 32a, 32b) respectivement coïncidents, et une position d'ouverture dans laquelle elle autorise un écoulement d'eau, sachant que ladite platine obturatrice mobile (23) est dotée, sur son côté pointant vers la platine obturatrice fixe (22) située côté sortie, d'au moins une surface d'équilibrage de pression avec laquelle, à l'état fermé de la vanne, une communication fluidique est instaurée, par l'intermédiaire d'au moins un canal de décharge (29a, 29b, 35a, 35b), vers au moins l'un des orifices de passage (28a, 28b) pratiqués dans la platine obturatrice (21) située côté afflux,
**caractérisée par le fait que**
la platine obturatrice mobile (23) peut être déplacée selon des coulissements linéaires.

2. Robinetterie sanitaire selon la revendication 1, dans laquelle la platine obturatrice mobile (23) comporte au moins un orifice de distribution (34a, 34b) qui coïncide, dans la position d'ouverture, avec les orifices de passage (28a, 28b, 32a, 32b) des platines obturatrices (21, 22) respectivement situées côté afflux et côté sortie ; et dans laquelle la communication fluidique emprunte ledit orifice de distribution (34a, 34b) à l'état fermé de la vanne.

3. Robinetterie sanitaire selon la revendication 1 ou 2, dans laquelle la platine obturatrice (22) située côté sortie ou la platine obturatrice mobile (23) est pourvue, respectivement sur son côté pointant vers ladite platine obturatrice mobile (23) et sur son côté tourné vers une sortie (15) de ladite robinetterie sanitaire (10), d'un évidement (36) au moyen duquel du fluide peut affluer, par-derrière, sur la surface d'équilibrage de pression.

4. Robinetterie sanitaire selon l'une des revendications précédentes, dans laquelle les trois platines obturatrices (21, 22, 23) de l'ensemble de distribution (20, 21, 22, 23) sont disposées dans un carter commun (20, 20') à l'intérieur de ladite robinetterie sanitaire.

5. Robinetterie sanitaire selon la revendication 4, dans laquelle le carter (20, 20') de l'ensemble de distribution est composé de deux parties (20, 20') dont la cohésion est assurée au moyen d'un ressort (25), lequel ressort (25) applique une force de pression aux platines obturatrices (21, 22, 23).

6. Robinetterie sanitaire selon l'une des revendications précédentes, équipée d'un entraînement de fermeture (16) comprenant
- un amortisseur (44, 45) muni d'un organe amortisseur coulissant (45) couplé mécaniquement à la platine obturatrice mobile (23), par l'intermédiaire d'un élément de réglage (17) agissant dans le sens axial, et
- un élément de rappel (46) appliquant une force de rappel audit organe amortisseur coulissant (45) ;
sachant que ledit organe amortisseur (45) peut être dévié d'une position initiale à une position finale, afin d'ouvrir ladite robinetterie sanitaire, en imprimant alors à ladite platine obturatrice mobile (23), par l'intermédiaire dudit élément de réglage (17), un mouvement vers la position d'ouverture à partir de laquelle ledit organe amortisseur (45) est automatiquement animé d'un mouvement rétrograde vers ladite position initiale, sous l'action de la force de rappel développée par ledit élément de rappel (46), en opposition à la résistance dudit amortisseur (44, 45), et ramène alors ladite platine obturatrice mobile (23) à la position de fermeture, par l'intermédiaire dudit élément de réglage (17).

7. Robinetterie sanitaire selon la revendication 6, dans laquelle, au cours de son mouvement rétrograde, l'élément de réglage (17) accomplit tout d'abord une course à vide avant qu'un organe d'entraînement (17"), prévu sur ledit élément de réglage (17), ne provoque un mouvement de fermeture de la platine obturatrice mobile (23).

8. Robinetterie sanitaire selon l'une des revendications 1 à 7, dans laquelle l'unité d'actionnement est pourvue d'un actionneur piloté électriquement et couplé mécaniquement à la platine obturatrice mobile (23), par l'intermédiaire d'un élément de réglage (17) agissant dans le sens axial.

9. Robinetterie sanitaire selon l'une des revendications 1 à 7, dans laquelle l'unité d'actionnement est réalisée sous la forme d'une unité d'actionnement mécanique couplée mécaniquement à la platine obturatrice mobile (23), par l'intermédiaire d'un élément de réglage (17) agissant dans le sens axial.

10. Robinetterie sanitaire selon l'une des revendications 6 à 9, incluant un groupe structurel de mélange (50) muni d'un composant mélangeur rotatif (52), la platine obturatrice mobile (23) de l'ensemble de distribution (20, 21, 22, 23), et ledit composant mélangeur rotatif (52), pouvant être réglés par l'intermédiaire de l'élément de réglage (17) du fait que ce dernier transmet des mouvements linéaires à ladite platine obturatrice mobile (23), et un mouvement rotatoire audit composant mélangeur rotatif (52).

11. Robinetterie sanitaire selon l'une des revendications précédentes, équipée d'un carter métallique (10) présentant une sortie d'eau (15), un écoulement d'eau étant guidé depuis l'ensemble de distribution (20, 21, 22, 23) jusqu'à ladite sortie (15), à l'intérieur dudit carter (10) de la robinetterie, par l'intermédiaire de conduits non métalliques.

12. Système de vannes (20, 21, 22, 23) dédié à une robinetterie sanitaire conforme à l'une des revendications précédentes.
